(19) Europäisches Patentamt
European Patent Office
Office européen des brevets

(11) **EP 1 957 547 B2**

(12) **NEW EUROPEAN PATENT SPECIFICATION**
After opposition procedure

(45) Date of publication and mention
of the opposition decision:
**06.02.2019   Bulletin 2019/06**

(45) Mention of the grant of the patent:
**26.10.2011   Bulletin 2011/43**

(21) Application number: **06829327.3**

(22) Date of filing: **06.12.2006**

(51) Int Cl.:
*C08F 10/02* (2006.01)          *C08J 5/18* (2006.01)
*C08F 110/02* (2006.01)

(86) International application number:
**PCT/EP2006/011689**

(87) International publication number:
**WO 2007/065644 (14.06.2007 Gazette 2007/24)**

(54) **POLYMER**

POLYMER

POLYMÈRE

(84) Designated Contracting States:
**AT BE BG CH CY CZ DE DK EE ES FI FR GB GR
HU IE IS IT LI LT LU LV MC NL PL PT RO SE SI
SK TR**

(30) Priority:  **07.12.2005   EP 05257516**

(43) Date of publication of application:
**20.08.2008   Bulletin 2008/34**

(73) Proprietor: **Borealis Technology Oy
06101 Porvoo (FI)**

(72) Inventors:
• **VOORTMANS, Peter
B-2800 Mechelen (BE)**

• **NILSEN, Jorunn
N-3930 Porsgrunn (NO)**

(74) Representative: **Dehns
St. Brides House
10 Salisbury Square
London EC4Y 8JD (GB)**

(56) References cited:
**EP-A- 1 555 292       WO-A1-2005/090464
WO-A2-96/19527       US-A1- 2002 042 472
US-B1- 6 552 150**

**Description**

This invention relates to a high density polyethylene polymer which possess excellent processability and mechanical strength which is also capable of being formed into films having remarkable water vapour barrier properties. In particular, the invention concerns a polyethylene polymer having high strain at break and tear resistance whilst being capable of formulation into, for example, a film, possessing excellent WVTR.

HDPE is widely used in the manufacture of films for a range of applications (e.g. shrink film, shopping bags etc). HDPE films are also commonly used in food packaging, e.g. in the packaging of dry foods such as cereals. Films used in food packaging require barrier properties (i.e. they should be impervious to moisture) in order to prevent or minimise degradation of the packaged product thereby enhancing its shelf life Rather than rely on a barrier layer, however, food packagers would prefer to use a polymer material that provides barrier protection itself. Water vapour transmission rate (WVTR) is thus an important parameter for polyethylene packaging materials, e.g: films, as it has a direct effect on the shelf life of the packed product. In most applications, the transmission rates should be as low as possible in order to avoid water exchange with the external environment.

A further requirement of HDPE film used in packaging is that it should be strong. This ensures that the film is not easily damaged (e.g. during transportation or handling) and that it will retain its form once the package is opened. It is particularly important that films used in packaging do not have a tendency to tear. A recognised problem with many films, and especially films used in food packaging, is that it is very easy to accidentally introduce a tear when opening the packaging. Such tears have a tendency to elongate which can cause the contents of the packaging to spill and in many cases necessitates moving the contents into new packaging.

Unfortunately, for polyethylene polymers, it is known that water vapour barrier properties are generally governed by crystallinity and film thickness, and are improved with increasing crystallinity, i.e. increasing density and improved by increased film thickness.

Increasing crystallinity affects the tensile properties and tear resistance of films. Tensile strain at break and tear resistance decrease with increasing density.

A particular balance therefore which the chemist seeks is that between water vapour barrier properties and tensile strain at break or tear resistance. For cereal packaging, strain at break in transverse direction, TD, should be high, in order to avoid tearing of the package when it is opened. Tear resistance in machine direction (MD) should also be as high as possible. A product with increased TD strain at break and MD tear resistance, and improved water vapour transmission rates compared to existing market standard would be advantageous, in particular in cereal packaging.

Moreover, for a variety of economic and environmental reasons, the market trend is to reduce package weight through down gauging. The better the balance between WVTR and toughness, the more down gauging potential has the material. It would allow the preparation of thinner packaging films.

The current market leading grades for use in cereal applications and the like are Ziegler-Natta or chromium catalyst produced high density polyethylenes with strain at break values of the order of 600% and water vapour transmission rates of the order of 4.5 $g/m^2/24h$ (for a 30 micron film). Typical tear resistances are between.0.1 to 0.19N (for a 30 micron film).

The present inventors have surprisingly found a new polymer material which possesses significantly better properties than the current market leading grades, in particular in relation to its strain at break, tear strength and WVTR properties, making it an ideal material for use in the packaging if foods such as cereals where moisture cannot be allowed to damage the product being packaged.

The new grade has a narrower molecular weight distribution and higher density (i.e. is more crystalline) than the market leading grades and yet still exhibits improved strain at break and tear resistance over less crystalline materials. This is most surprising as higher crystallinity materials are typically associated with lower strain at break and tear resistance values. Further unexpectedly, the narrower molecular weight distribution does not compromise the processability properties, but instead a very advantageous balance between WVTR and processability is achieved.

Thus, viewed from one aspect, the invention provides a high density polyethylene homopolymer or copolymer with at least one $C_{3-20}$ alpha olefin being formed using Ziegler-Natta catalysis, wherein said polymer has an $MFR_2$ of 0.05 to 10 g/10min, an $MFR_{21}$ of 5 to 50 g/10min, a density of at least 940 $kg/m^3$, a Mw/Mn of 4 to 7 and a strain at break (measured according to ISO 527-3) in the transverse direction of at least 650% and when said polymer is formulated as a film having a thickness of 30 microns, it has a WVTR of less than 4.5 $g/m^2/24$ hours according to ASTM F 1249 at 38°C and 90% humidity..

It will be appreciated that the mechanical properties (such as tear resistance) and WVTR properties of films vary depending on the thickness of the film. These values are therefore reported for a 30 micron film. The 30 micron film on which the properties are measured is produced according to the method set out in Example 2 (film Preparation).

Viewed from another aspect, the invention provides an article or a film, e.g. monolayer or multilayer film, comprising a high density polyethylene homopolymer or copolymer as hereinbefore described. Thus, the invention provides a film comprising a high density polyethylene homopolymer or copolymer with at least one $C_{3-20}$ alpha olefin

being formed using Ziegler-Natta catalysis, wherein said polymer has an $MFR_2$ of 0.05 to 10 g/10min, an $MFR_{21}$ of 5 to 50 g/10min, a density of at least 940 kg/m$^3$, a Mw/Mn of 4 to 7 and a strain at break (measured according to ISO 527-3) in the transverse direction of at least 650% and when said polymer is formulated as a film having a thickness of 30 microns, it has a WVTR of less than 4.5 g/m$^2$/24 hours according to ASTM F 1249 at 38°C and 90% humidity.

It has also been found that the HDPE of the invention can be formed into a film which exhibits very high Elmendorf tear resistance in the machine direction whilst also exhibiting excellent WVTR High tear resistance is normally associated with lower density materials, i.e. those with poor WVTR, but the present inventors have found that it is possible to produce films having excellent tear resistance and WVTR.

Thus, viewed from another aspect, the invention provides a high density polyethylene homopolymer or copolymer as hereinbefore described having an Elmendorf tear resistance in the machine direction of greater than 0.19N, preferably at least 0.22N (ISO 6383/2).

Viewed from another aspect the invention provides use of a polymer or a film as hereinbefore described in packaging.

The unexpectedly good balance of barrier properties and tear resistance of the composition of the invention are expressed through the above combinations of strain at break, WVTR and Elmendorf properties. Ideally, the polymers and films of the invention possess strain at break, WVTR and Elmendorf tear resistance properties meeting the above requirements.

The films of the present invention may comprise more than one layer and/or have any thickness. The phrase "when said polymer is formulated as a film having a thickness of 30 microns" is therefore not intended to be limiting on the thickness of any film and is simply included so that a quantitative measure of WVTR or tear resistance can be specified. In other words, films comprising HDPE's of the invention but having more than one layer, other components and/or having a thickness of other than 30 microns are included in the scope of the invention. What is required is that when the HDPE is used alone (i.e. as the only polymer component) to form a film 30 microns thick, the specified WVTR value and/or tear resistance values are satisfied.

Films of 30 microns in thickness for use in assessing the WVTR and tear resistance parameters above are made according to the protocol set forth in example 2.

The modality of the present polyethylene composition with respect to molecular weight distribution is not critical, and the HDPE of the invention may be multimodal (e.g. bimodal) or unimodal. Preferably the composition is unimodal. As used herein the term "multimodal" is intended to cover polymers having at least two differently centred maxima along the x-axis of their molecular weight distribution curve as determined by gel permeation chromatography. In such a curve d(log(MW)) is plotted as ordinate against log (MW), where MW is molecular weight. By unimodal is meant that the molecular weight profile of the polymer comprises a single peak.

The high density polyethylene of use in invention may have a density of at least 940 kg/m$^3$, e.g. at least 945 kg/m$^3$, preferably in the range of from 950 to 980 kg/m$^3$, e.g. 950 to 965 kg/m$^3$. Especially preferably, the density of the high density polyethylene polymer of the invention should be at least 955 kg/m$^3$.

The HDPE of the invention preferably has a crystalline melting point between 130 to 170°C (as determined by DSC analysis). The crystallinity of the HDPE is preferably 50 to 90 % as determined by DSC analysis, preferably 65 to 80%, e.g. 70 to 80%.

The high density polyethylene polymer is either a homopolymer or a copolymer comprising at least one $C_{3-20}$ alpha olefin. Preferred comonomers are $C_{3-12}$ alpha-olefins, e.g. 1-butene, 1-hexene or 1-octene. The amounts of comonomer incorporated will be low, e.g. 0,1 to 2 wt% relative to the amounts of ethylene present. Preferably, however, the polyethylene polymer of this invention is a homopolymer.

The $MFR_2$ (melt flow rate ISO 1133 at 190°C under a load of 2.16 kg) of the polyethylene polymer should preferably be in the range 0.05 to 10 g/10min, preferably 0.1 to 5.0 g/10min, e.g. 0.5 to 2.0 g/10min.

The $MFR_{21}$ (melt flow rate ISO 1133 at 190°C under a load of 21.6 kg) of the polyethylene polymer is in the range 5 to 50 g/10min, preferably 10 to 40 g/10min, e.g. 20 to 30 g/10min.

In a highly preferred embodiment, the high density polyethylene polymer of the invention has a number average molecular weight (Mn) of 10,000-100,000, e.g. 20,000-60,000, especially 25,000 to 50,000. The Mn ranges given above define a particularly preferable area which further contributes to the advantageous WVTR properties of the HDPE's of the invention without compromising the processability. Thus, very beneficial balance between WVTR and processability can be achieved with the invention.

The weight average molecular weight (Mw) should preferably be in the range 80,000 to 200,000, e.g. 100,000 to 170,000, especially 120,000 to 150,000.

The molecular weight distribution Mw/Mn is 4 to 7, most especially 4.5 to 6.0.

A further measure of the broadness of the molecular weight distribution is the polydispersity index (PI). For the high density polyethylenes of the invention, PI is preferably 0.3 to 2, especially 0.5 to 1.5, most especially less than 1.

The rheological behaviour of polymers is a vital property as it is a further indicator of the molecular weight distribution and also governs the processability of the polymer. The polyethylenes of the invention may possess a G' values at 5kPa of less than 1500.

The SHI (2.7/210) value of the polyethylene polymers of the invention may be less than 20, preferably less 15, preferably less 10, especially less than 7.5. Eta 0.05 values may be less than 10,000.

As previously mentioned, the tensile properties of the claimed polyethylene materials are also important, in particular in the transverse direction. Thus, the tensile modulus in the transverse direction of the high density polyethylene polymers may be at least 1000 MPa, e.g. in the range from 1050 to 1400 MPa, preferably at least 1100MPa, especially at least 1160 MPa.

The stress at yield of the polyethylene polymers of the invention in the transverse direction may also be high, e.g. at least 25 MPa, preferably at least 30 MPa, especially at least 32 MPa.

The materials of the invention have also been found to possess excellent tensile strength in the transverse direction. Thus, tensile strength (TS) may be at least 25 MPa, preferably at least 30 MPa, especially at least 35 MPa.

As noted above, increasing crystallinity is typically associated with a reduction in tear strengths and strain at break properties. Whilst increasing crystallinity might therefore have the desired effect on WVTR values, it is normally associated with a reduction in beneficial mechanical and processing properties. The polyethylene polymer of the invention has been surprisingly found to possess excellent strain at break properties and acceptable processability despite being of higher density and crystallinity and having lower SHI than market leading materials.

Thus, the strain at break properties of the polyethylene polymers of the invention in the transverse direction are at least 650%, preferably at least 700%, especially at least 750%. Most especially, strain at break values may exceed 800%. It has also been noted by the inventors that the strain at break values are very stable. It is not uncommon when carrying out strain at break tests for the sample to fail almost the instant the test is begun. This does not mean the sample has a low strain at break value, rather it is a problem associated with uneven film quality or a problem with the strain at break testing procedure. Typically therefore, the polymer chemist repeats strain at break tests many times (e.g. 10 times) to ensure that a fair result is achieved. The HDPE's of the present invention have been found to fail only very irregularly, i.e. the strain at break test can be carried out repeatedly without fear that a sample may fail before full strain is reached. This finding indicates the evenness of the film, particularly to the even film thickness distribution (not much variation in the thickness of the film specimen).

The polyethylene composition is manufactured using Ziegler-Natta catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within Mg-based support by the emulsion/solidification method adapted to PE catalyst, e.g. as disclosed in WO03106510 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP 0 810 235.

In principle any polymerisation method including solution, slurry and gas phase polymerisation can be used for producing the high density polyethylene polymer. The temperature in the polymerisation reactor needs to be sufficiently high to reach an acceptable activity of the catalyst. On the other hand, the temperature should not exceed the softening temperature of the polymer. The temperature may therefore be in the range of 50 to 110°C, preferably 75 to 105°C and more preferably 75 to 100°C.

The pressure in the reactor can be selected to fulfil the desired objectives, e.g. to reach a desired density of the reaction medium, to reach a suitable monomer concentration or to maintain the reactor contents in liquid phase. Therefore, the pressure depends on in which phase the reaction is conducted. Suitable pressure ranges in slurry polymerisation are 10 to 100 bar, preferably 30 to 80 bar.

Preferably the polymerisation process takes place in slurry, optionally operating in bulk or using a diluent. Ethylene and an inert diluent (e.g. a hydrocarbon) can be introduced into the reactor together with the polymerisation catalyst. Hydrogen may be introduced into the reactor to control the melt index of the polymer. Further, comonomer may be used to control the density of the polymer. The exact amounts of hydrogen and, if required, comonomer vary depending on the catalyst used and the target MFR and density. Suitably, the ratio of hydrogen to ethylene in the fluid phase is from 50 to 800 mol/kmol and the ratio of the comonomer to ethylene is from 0 to 300 mol/kmol, preferably from 0 to 200 mol/kmol. Typical slurry residence times are 0.5 to 5 hours, e.g. 0.5 to 1 hr.

If the polymerisation is conducted as a slurry polymerisation, any suitable reactor type known in the art may be used. A continuous stirred tank reactor and a loop reactor are suitable examples of useful reactor types.

If the polyethylene composition is multimodal (e.g. bimodal) it can be made by mechanical blending or in-situ blending during the polymerisation process of the polymer in a known manner. Preferably the multimodal polymer is made by in-situ blending in a multistage polymerisation process containing two or more reactors, which may conventionally be slurry, e.g. loop, and/or gas phase reactors, in any order. The lower molecular component and higher molecular weight component can also be prepared in any reactor type in any order. Preferably however, the lower molecular weight component will be prepared first and the higher molecualr weight second. Preferably, multimodal HDPE's of the invention are produced in a two-stage polymerization, in particular a slurry polymerization in a loop reactor followed by a gas phase polymerization in a gas phase reactor. A loop reactor - gas phase reactor system is marketed by Borealis A/S, Denmark as a BORSTAR reactor system.,

Preferably, however, unimodal HDPE polymers are produced, e.g. in the slurry phase or gas phase.

If gas phase reactions are employed then conditions are preferably as follows:

- the temperature is within the range of 50°C to 130°C, preferably between 60°C and 115°C,
- the pressure is within the range of 10 bar to 60 bar, preferably between 10 bar to 40 bar,
- hydrogen can be added for controlling the molar mass in a manner known per se,
- the residence time is typically 1 to 8 hours.

If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

The polyethylene polymers as hereinbefore described can be employed in the manufacture of any suitable article e.g. a film, fibre, moulded article, cable, wire or pipe. Thus, the polyethylene polymer can be injection moulded, blow moulded, injection stretch blow moulded, rotationally moulded, extruded. However, the polyethylenes of the invention are most preferably employed in the manufacture of films.

Films comprising the polyethylene polymer of the invention can be monolayer or multilayer. In a monolayer film, the polyethylene may form the only component in the film (other than standard additives) or the polyethylene can be mixed with other polyolefins such as low density polyethylene or linear low density polyethylene (as described below).

The mechanical properties and WVTR properties of films of the invention are excellent. For example, the tear resistance in the machine direction of a film containing a high density polyethylene of the invention may be at least 0.1 sun, preferably greater than 0.19 N, especially at least 0.20N, most especially at least 0.22N. It will be appreciated that tear resistance varies depending on the thickness of the film. These values are therefore normalised for a 30 micron film formed from the HDPE. The 30 micron film to which the values of tear resistance are normalised is produced according to the method set out in Example 2 Film Preparation

The WVTR of the films of the invention may be less than 4.5 $g/m^2/24h$, e.g less than 4.3 $g/m^2/24h$, preferably less than 4.2 $g/m^2/24h$, especially less than 4 $g/m^2/24h$. It will be appreciated that WVTR varies depending on the thickness of the film. These values are therefore normalised for a 30 micron film formed from the HDPE. The 30 micron film to which the values of WVTR are normalised is produced according to the method set out in Example 2 Film Preparation.

The composition of the invention may be blended with other polymers to form a blend. Thus other polymers may be present in the layer of the film comprising HDPE. Typical polymers which may be present include LDPE, LLDPE, ethylene-propylene rubber. Such polymers may comprise up to 25 % wt, e.g. up to 20 % wt of the total polymer content of the layer. The films may also comprise a mixture of two HDPE's of the invention. More preferably, however, the HDPE hereinbefore described is the sole polyolefin present in the HDPE-containing layer (e.g. less than 5 % by weight, more preferably less than 1 % by weight other polyolefin is present). Still more preferably the HDPE hereinbefore described is essentially the sole polymer present in the HDPE-containing layer (e.g. less than 5 % by weight, more preferably less than 1 % by weight other polymer is present). When HDPE is the sole polymer present, the films which result may be highly homogeneous.

The layer of the film comprising HDPE and any other layer of the film if appropriate, may comprise conventional additives such as antioxidants, antiblocking agents, antistatic agents, heat stabilisers, ultraviolet absorbers, colourings, lubricants as well as polymer processing agent.

It has been surprisingly found, however, that the films of the invention can function with particularly low levels of stearate additive. Stearates are often added to polymer films as acid scavengers and lubricants to improve processability. Suitable metal stearates include Zn-stearate or Ca-stearate, especially calcium stearate. In one embodiment, the inventors have found that when using the HDPE's of the invention in the manufacture of polymer films, the amount of stearate which is required can be less than 3500 ppm, preferably less than 2000 ppm.

Whilst the films of the present invention are preferably monolayer, they may comprise multilayers (e.g. comprise 2 to 7 layers). Preferred multilayer films comprise 2 to 5 layers, especially 2 or 3 layers. In multilayer films, up to 3 (e.g. 2) layers may comprise the HDPE hereinbefore described.

Other layers which may have differing functions in the film structure may be present including, i.a., a sealing layer and/or an oxygen barrier layer, e.g. a PET, polyamide or Al-coated layer as is known in the art. The layers can be combined using conventional lamination techniques.

Conventional water barrier layers such as PVDC and Al-foil may also be present but are preferably absent. Thus in a preferred embodiment the film of the invention does not comprise an additional barrier layer.

The films may be made by any conventional film extrusion procedure known in the art including cast film and blown film extrusion. Thus the film may be produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the film is a multilayer film then the various layers are typically coextruded. The skilled man will be aware of suitable extrusion conditions. Generally, however, extrusion is carried out at a temperature in the range 160°C to 240°C, and cooled by blowing gas (generally air) at a temperature of 10 to 50°C to provide a frost line height of 2 to 8 times the diameter of the die. The blow up ratio should generally be in the range 2 to 4, preferably 2.5 to 3.

The resulting films may have any thickness conventional in the art. Typically films may have a thickness of 6 to 200 microns, preferably 10 to 150 microns, e.g. 20 to 80 microns or 15 to 50 microns.

The films of the invention have a wide variety of applications but are of particular interest in packaging of food, e.g. dry food and especially cereals. Thus viewed from a yet further aspect the invention provides use of the films hereinbefore described in the manufacture of dry food packaging, e.g. cereal packaging.

The invention will now be described further with reference to the following non-limiting examples.

**Analytical Tests**

Density of the materials is measured according to ISO 1183:1987 (E), method D, with isopropanol-water as gradient liquid. The cooling rate of the plaques when crystallising the samples was 15 C/min. Conditioning time was 16 hours.

$MFR_2$ is measured according to ISO 1133 at 190°C at load of 2.16 kg. $MFR_2$, is measured according to ISO 1133 at 190°C at load of 21.6 kg

Tensile modulus (secant modulus, 0.05-1.05%) is measured according to ASTM D 882-A on 30 $\mu$m films. The speed of testing is 5mm/min. The test temperature is 23°C. Width of the film was 25 mm.

Tensile Stress at yield is measured according to ISO 527-3. The test temperature is 23°C. Width of the film was 25 mm.

Tensile Strain at break and tensile strength are measured according to ISO 527-3. The speed of testing is 500 mm/min. The test temperature is 23°C. Width of the film was 25 mm.

WVTR (water vapour transmission rate) was measured according to ASTM F 1249 at 38°C and 90 % relative humidity.

Rheology of the polymers was determined by frequency sweep at 190 C under nitrogen atmosphere according to ISO 6721-10, using Rheometrics RDA II Dynamic Rheometer with parallel plate geometry, 25 mm diameter plate and 1.2 mm gap. The measurements gave storage modulus (G'), loss modulus (G") and complex modulus (G*) together with the complex viscosity ($\eta$*), all as a function of frequency ($\omega$) These parameters are related as follows: For any frequency $\omega$: The complex modulus: $G^* = (G'^2 + G''^2)^{1/2}$. The complex viscosity: $\eta^* = G^*/\omega$.

According to the empirical Cox-Merz rule, for a given polymer and temperature, the complex viscosity as function of frequency (given in rad/s) measured by this dynamic method is the same as the viscosity as a function of shear rate for steady state flow (e.g. a capillary).

Shear thinning, that is the decrease of viscosity with G*, becomes more pronounced when the molecular weight distribution (e.g. as measured by SEC for linear polymers) broadens. This property can be characterised by the shear thinning index, SHI, which is the ratio of the viscosity at a lower stress and the viscosity at a higher shear stress. A polymer with broad molecular weight distribution will have a higher SHI than one with a more narrow. Two polymers of equal molecular weight distribution broadness as seen by SEC, but of different molecular weights, will have about equal SHI. In the examples, shear stresses (or G*) of 2.7, 5 and 210 kPa were used as basis. Thus:

$$SHI\,(2.7/210) = \eta^*\,(G^* = 2.7kPa)/\,\eta^*\,(G^* = 210\,kPa)$$

**Tear resistance (determined as Elmendorf tear (N))**

The tear strength is measured using the ISO 6383/2 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

**Molecular weights, molecular weight distribution, Mn, Mw, MWD**

Mw/Mn/MWD are measured by GPC according to the following method:
The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howinks constant K: $9.54*10^{-5}$ and a: 0.725 for PS, and K: $3.92*10^{-4}$ and a: 0.725 for PE)

**Polydispersity**

The polydispersity index PI is calculated according to the following equation: PI = $10^5$ Pa/GC (PI= 100000Pa/GC) wherein GC in Pa is the cross over modulus at which G'=G"=GC.
The rheology measurements have been made according to ISO 6421-10. Measurements were made at 220°C and 200°C. G' and G" indicate storage modulus and loss modulus, respectively. Measurements were made on a Physica MCR 300 rheometer with a plate-plate fixture, plate diameter 25 mm, and a distance between the plates of 1.8 mm.

**Example 1 HDPE preparation**

Into a loop reactor having a volume of 500 $dm^3$ were continuously introduced isobutane, ethylene and hydrogen. In addition, a polymerisation catalyst prepared otherwise according to Example 3 of WO 95/35323 was introduced into the reactor together with triethyl aluminium so that the molar ratio of aluminium in the activator to titanium in the solid component was 15. The loop reactor was operated at 96 °C temperature and 60 bar pressure. Ethylene content in the fluid phase in the slurry reactor was 8.5 % by mole and the ratio of hydrogen to ethylene was 0.210 $kgH_2$/ton C2. The polymer produced in the loop reactor had an $MFR_2$ of 0.9 g/10min, $MFR_{21}$ of 27 g/10 min and a density of 958 $kg/m^3$. The feed rates of ethylene and catalyst were adjusted so that the production rate of the polymer was 30 kg/h.

The polymer powder was recovered and mixed with 1500 ppm Irganox B215 and 3500 ppm calcium stearate. The mixture was extruded and granulated in ZSK70 twin screw extruder manufactured by Werner & Pfleiderer.

**Example 2 Film Preparation**

30 $\mu$m films were made on a 3 layer co-extrusion blown film line from Windmoller & Holscher (applies for all above and below WVTR measurements, tear resistance properties and also the other mechanical properties) with a 200 mm die. The die gap was 1.2 mm. All three layers contained the same pure HDPE material.
The blow up ratio (BUR) was 3:1.
The Frost Line Height (FLH): 70 cm above die.
The temperature profile was 200 °C flat.
The output rate was 120 kg/h
Internal bubble cooling (IBC) was applied.

**Example 3**

The polymer and film of examples 1 and 2 was compared to a commercially available catalyst produced HDPE grade and a Commercially available Ziegler Natta HDPE Grade. Results are presented in Table 1 below.

| | Unit | Commercial HDPE | Commercial HDPE ZN catalyst | Example 1 |
|---|---|---|---|---|
| MFR$_2$ | g/10 min | 1,2 | 0,5 | 0,9 |
| Density | kg/m$^3$ | 958 | 954 | 958 |
| **TD tensile properties** | | | | |
| Tensile modulus, | MPa | 1140 | 1115 | 1185 |
| Stress at yield | MPa | 29 | 30 | 34,5 |
| Tensile strength | MPa | 26 | 25 | 42,5 |
| Strain at break (Av over a number of tests) | % | 493 | 616 | 821 |
| **Values normalised to 30$\mu$m** | | | | |
| Elmendorf tear resistance, MD | N | 0,11 | 0,19 | 0,24 |
| Water Vapour Transmission Rate, WVTR | gtm$^2$*24h | 4,6 | 4,4 | 3,6 |
| Oxygen permeability | cm$^3$/m$^2$ *24h | 3100 | 3000 | 2100 |
| **Rheological and GPC data** | | | | |
| Mw | | 120000 | 190000 | 140000 |
| Mn | | 15000 | 21000 | 30000 |
| MWD | | 8 | 9 | 5 |
| G' (5.0 kPa) | | 2600 | 1700 | 1200 |
| PI | | 1,6 | 1,3 | 0,8 |
| SHI (2.7/210) | | 21 | 13 | 5,7 |
| eta 0,05 | | 12887 | 15141 | 8995 |

It is clearly seen that the polymer of Example 1 possess higher crystallinity (density) and hence its film (Ex 2) possesses higher WVTR. Simultaneously, the HDPE possesses improved strain at break. The oxygen permeability is also lower than the commercial market products.

**Claims**

1. A high density polyethylene homopolymer or copolymer with at least one C$_{3-20}$ alpha olefin being formed using Ziegler-Natta catalysis, wherein said polymer has an MFR$_2$ of 0.05 to 10 g/10min, an MFR$_{21}$ of 5 to 50 g/10min, a density of at least 940 kg/m$^3$, a Mw/Mn of 4 to 7 and a strain at break (measured according to ISO 527-3) in the transverse direction of at least 650% and when said polymer is formulated as a film having a thickness of 30 microns, it has a WVTR of less than 4.5 g/m$^2$/24 hours according to ASTM F 1249 at 38°C and 90% humidity.

2. A high density polyethylene as claimed in claim 1 wherein when said polymer is formulated as a film having a thickness of 30 microns, it has an Elmendorf tear resistance in the machine direction of greater than 0.19N ((ISO 6383/2).

3. A polymer as claimed in any preceding claim being a homopolymer.

4. A polymer as claimed in any preceding claim being unimodal.

5. A polymer as claimed in any preceding claim having a density of at least 955 kg/m$^3$.

**6.** A polymer as claimed in any preceding claim having an Mn of 20,000-60,000.

**7.** A polymer as claimed in any preceding claim having a strain at break in the transverse direction of at least 700%.

**8.** A polymer as claimed in any preceding claim wherein when said polymer is formulated as a film having a thickness of 30 microns, it has a WVTR of less than 4 g/m$^2$/24 hours according to ASTM F 1249 at 38°C and 90% humidity.

**9.** A polymer as claimed in any preceding claim wherein when said polymer is formulated as a film having a thickness of 30 microns, it has an Elmendorf tear resistance in the machine direction of greater than 0.20N ((ISO 6383/2).

**10.** An article or film comprising a polymer as claimed in any one of claim 1 to 9.

**11.** Use of a polymer of or film as claimed in claim 1 to 10 in packaging, e.g. dry food packaging, especially cereal packaging.

**Patentansprüche**

**1.** Polyethylenhomopolymer oder -copolymer mit hoher Dichte und mit zumindest einem C$_{3-20}$ alpha-Olefin, das unter Verwendung von einer Ziegler-Natta-Katalyse gebildet wird, wobei das Polymer einen MFR$_2$-Wert von 0,05 bis 10 g/10 min, einen MFR$_{21}$-Wert von 5 bis 50 g/10 min, eine Dichte von mindestens 940 kg/m$^3$, ein Mw/Mn von 4 bis 7 und eine Bruchdehnung (gemessen gemäß ISO 527-3) in Querrichtung von mindestens 650 % und, wenn das Polymer als eine Folie formuliert ist, die eine Dicke von 30 μm aufweist, es eine WVTR gemäß ASTM F 1249 bei 38 °C und 90 % Feuchte von weniger als 4,5 g/m$^2$/24 Stunden aufweist.

**2.** Polyethylen mit hoher Dichte nach Anspruch 1, wobei, wenn das Polymer als eine Folie formuliert ist, die eine Dicke von 30 μm aufweist, es eine Reißfestigkeit nach Elmendorf in Maschinenrichtung von mehr als 0,19 N (ISO 6383/2) aufweist.

**3.** Polymer nach einem der vorhergehenden Ansprüche, das ein Homopolymer ist.

**4.** Polymer nach einem der vorhergehenden Ansprüche, das unimodal ist.

**5.** Polymer nach einem der vorhergehenden Ansprüche, das eine Dichte von mindestens 955 kg/m$^3$ aufweist.

**6.** Polymer nach einem der vorhergehenden Ansprüche, das ein Mn von 20.000 bis 60.000 aufweist.

**7.** Polymer nach einem der vorhergehenden Ansprüche, das eine Bruchdehnung in Querrichtung von mindestens 700 % aufweist.

**8.** Polymer nach einem der vorhergehenden Ansprüche, wobei, wenn das Polymer als eine Folie formuliert ist, die eine Dicke von 30 μm aufweist, es eine WVTR gemäß ASTM F 1249 bei 38 °C und 90 % Feuchte von weniger als 4 g/m$^2$/24 Stunden aufweist.

**9.** Polymer nach einem der vorhergehenden Ansprüche, wobei, wenn das Polymer als eine Folie formuliert ist, die eine Dicke von 30 μm aufweist, es eine Reißfestigkeit nach Elmendorf in Maschinenrichtung von mehr als 0,20 N (ISO 6383/2) aufweist.

**10.** Artikel oder Folie, umfassend ein Polymer nach einem der Ansprüche 1 bis 9.

**11.** Verwendung eines Polymers oder einer Folie nach den Ansprüche 1 bis 10 beim Verpacken, z. B. beim Verpacken von trockenen Nahrungsmitteln, insbesondere beim Verpacken von Cerealien.

**Revendications**

**1.** Homopolymère ou copolymère de polyéthylène haute densité ayant au moins une alpha-oléfine en C$_3$-C$_{20}$ formé en utilisant un catalyseur de Ziegler-Natta, dans lequel ledit polymère présente un MFR$_2$ de 0,05 à 10 g/10 min, un

MFR$_{21}$ de 5 à 50 g/10 min, une masse volumique d'au moins 940 kg/m$^3$, un Mw/Mn de 4 à 7 et un allongement à la rupture (mesuré selon la norme ISO 527-3) dans le sens transversal d'au moins 650 % et lorsque ledit polymère est formulé sous la forme d'un film ayant une épaisseur de 30 microns, il a un WVTR inférieur à 4,5 g/m$^2$/24 heures conformément à la norme ASTM F 1249 à 38 °C et 90 % d'humidité.

2. Polyéthylène haute densité selon la revendication 1, dans lequel lorsque ledit polymère est formulé sous la forme d'un film ayant une épaisseur de 30 microns, il a une résistance à la déchirure Elmendorf dans le sens de la machine supérieure à 0,19 N (ISO 6383/2).

3. Polymère selon l'une quelconque des revendications précédentes, qui est un homopolymère.

4. Polymère selon l'une quelconque des revendications précédentes, qui est unimodal.

5. Polymère selon l'une quelconque des revendications précédentes, qui a une masse volumique d'au moins 955 kg/m$^3$.

6. Polymère selon l'une quelconque des revendications précédentes, qui a un Mn de 20 000 à 60 000.

7. Polymère selon l'une quelconque des revendications précédentes, qui a un allongement à la rupture dans le sens transversal d'au moins 700 %.

8. Polymère selon l'une quelconque des revendications précédentes, dans lequel lorsque ledit polymère est formulé sous la forme d'un film ayant une épaisseur de 30 microns, il a un WVTR inférieur à 4 g/m$^2$/24 heures conformément à la norme ASTM F 1249 à 38 °C et 90 % d'humidité.

9. Polymère selon l'une quelconque des revendications précédentes, dans lequel lorsque ledit polymère est formulé sous la forme d'un film ayant une épaisseur de 30 microns, il a une résistance à la déchirure Elmendorf dans le sens de la machine supérieure à 0,20 N (ISO 6383/2).

10. Article ou film comprenant un polymère selon l'une quelconque des revendications 1 à 9.

11. Utilisation d'un polymère d'un ou film selon les revendications 1 à 10 dans le conditionnement, par exemple le conditionnement d'aliments secs, en particulier le conditionnement de céréales.

**EP 1 957 547 B2**

**REFERENCES CITED IN THE DESCRIPTION**

**Patent documents cited in the description**

- WO 9535323 A
- WO 0155230 A
- EP 810235 A

- WO 9951646 A
- WO 03106510 A
- EP 0810235 A